# EUROPÄISCHE PATENTANMELDUNG

(11) **EP 0 579 092 A1**
(43) Veröffentlichungstag der Anmeldung: **19.01.1994**
(21) Anmeldenummer: 93110829.4
(22) Anmeldetag: 07.07.1993
(51) Int. Cl.: E02B 3/12, E02D 17/20

(54) **Verfahren zum Rekultivieren des Ufergrundes von Gewässern**

(30) Priorität: 11.07.1992 DE 4222895
(71) Anmelder: Weigel, Michael, D-47804 Krefeld (DE)
(72) Erfinder: Weigel, Michael, D-47804 Krefeld (DE)
(74) Vertreter: Stark, Walter, Dr.-Ing.

(57) **Zusammenfassung**

Die Erfindung betrifft ein Verfahren zum Rekultivieren des Ufergrundes von Gewässern durch Einsetzen von Pflanzen in den Ufergrund. Um ein Ausschwemmen, Zerstören oder Entfernen der Pflanzen zu vermeiden und für eine dauerhafte Rekultivierung soll eine Mehrzahl von Pflanzen auf Matten aus natürlichem Material gepflanzt und in einem Wasserbekken vorkultiviert werden, bis die Matten durchwurzelt sind. Anschließend sollen dann die Matten mit den vorkultivierten Pflanzen im Bereich des Ufergrundes ausgelegt und mit Pflöcken im Ufergrund verankert werden.

## Beschreibung

Die Erfindung betrifft ein Verfahren zum Rekultivieren des Ufergrundes von Gewässern durch Einsetzen von Pflanzen in den Untergrund.

Viele natürliche Gewässer sind, auch durch den Eingriff des Menschen, an ihren Ufersäumen spärlich bewachsen. Besonders der Bereich zwischen 20 und 60 cm Wassertiefe bietet vielen heimischen Wasserpflanzen Raum. Jedoch treten gerade hier Probleme bei der Bepflanzung auf. Setzt man einzelne Pflanzen in Topfballen ein, werden diese oft ausgeschwemmt, von Wasservögeln oder Bisamratten zerstört oder gar von Spaziergängern entfernt. Außerdem hat eine einzelne in den Ufergrund ausgebrachte Pflanze oft nicht die Möglichkeit, bei wechselnden Wasserständen und unterschiedlichen Wasserqualitäten gut durchzuwurzeln. Die Folgen sind hohe Ausfallraten und damit das Scheitern einer Rekultivierungsmaßnahme.

Aufgabe der Erfindung ist es, den Ufergrund von Gewässern so zu rekultivieren, daß die eingebrachten Pflanzen gegen Ausschwemmen, Zerstören oder Entfernen gesichert sind und der Ufergrund dauerhaft rekultiviert wird.

Diese Aufgabe wird dadurch gelöst, daß eine Mehrzahl von Pflanzen auf Matten aus natürlichem Material gepflanzt und in einem Wasserbecken vorkultiviert werden, bis die Matten durchwurzelt sind, und daß dann die Matten mit den vorkultivierten Pflanzen im Bereich des Ufergrundes ausgelegt werden. Bei Gewässern mit stärkerer Strömung kann es zweckmäßig sein, die Matten mit Pflöcken im Ufergrund zu verankern. Erfindungsgemäß wird eine bestimmte Anzahl von Pflanzen auf Matten, die eine Grundfläche von bis zu 1 x 1 m großen Matten, die aus Kokos oder Sisal bestehen können, gepflanzt und zunächst in einem Wasserbecken vorkultiviert, bis die Matten hinreichend durchwurzelt sind. Die dann im Ufergrund ausgebrachten und ggf. verankerten Matten können nicht mehr ausgeschwemmt werden. Auch eine Zerstörung oder Entwendung der Pflanzen ist weitgehend ausgeschlossen, weil die Pflanzen an die Matten gebunden sind.

## Patentansprüche

1. Verfahren zum Rekultivieren des Ufergrundes von Gewässern durch Einsetzen von Pflanzen in den Ufergrund, dadurch gekennzeichnet, daß eine Mehrzahl von Pflanzen auf Matten aus natürlichem Material gepflanzt und in einem Wasserbecken vorkultiviert werden, bis die Matten durchwurzelt sind, und daß dann die Matten den vorkultivierten Pflanzen im Bereich des Ufergrundes ausgelegt werden.

2. Verfahren nach Anspruch 1, dadurch gekennzeichnet, daß die Matten mit Pflöcken im Ufergrund verankert werden.

3. Verfahren nach Anspruch 1 oder 2, dadurch gekennzeichnet, daß Matten aus Kokos oder Sisal verwendet werden.
